# EUROPÄISCHE PATENTSCHRIFT

(11) **EP 1 629 302 B1**
(45) Veröffentlichungstag und Bekanntmachung des Hinweises auf die Patenterteilung: **30.03.2011**
(21) Anmeldenummer: 04727295.0
(22) Anmeldetag: 14.04.2004
(51) Int. Cl.: G01S 13/93, G01S 15/93, G01S 15/10

(54) **VERFAHREN UND VORRICHTUNG ZUR DETEKTION VON OBJEKTEN IN DER UMGEBUNG EINES FAHRZEUGS**
METHOD AND DEVICE FOR DETECTING OBJECTS IN A MOTOR VEHICLE ENVIRONMENT
PROCEDE ET DISPOSITIF POUR DETECTER DES OBJETS DANS L'ENVIRONNEMENT D'UN VEHICULE

(30) Priorität: 22.05.2003 DE 10323144
(43) Veröffentlichungstag der Anmeldung: 01.03.2006
(73) Patentinhaber: ROBERT BOSCH GMBH, 70442 Stuttgart (DE)
(72) Erfinder: DANZ, Christian, 70469 Stuttgart (DE)
(86) Internationale Anmeldenummer: PCT/EP2004/050514
(87) Internationale Veröffentlichungsnummer: WO 2004/104631

(56) Entgegenhaltungen:
- EP-A- 0 726 473
- WO-A-95/23079
- GB-A- 2 315 628
- US-A- 5 359 331

## Beschreibung

### Technisches Gebiet

Die vorliegende Erfindung betrifft ein Verfahren und eine Vorrichtung zur Detektion von Objekten in der Umgebung eines Fahrzeugs mit den im Anspruch 1 und im Anspruch 8 genannten Merkmalen.

### Stand der Technik

Es sind schon Vorrichtungen zur Detektion von Objekten in der Umgebung eines Fahrzeugs bekannt, die insbesondere den toten Winkel eines Fahrzeugs überwachen, so genannte Blind-Spot-Detektionssysteme (BSD-Systeme). Diese dienen im Allgemeinen der elektronischen Erkennung von Objekten in der Umgebung des Fahrzeuges, welche der Fahrer gegebenenfalls nur durch Drehen seines Kopfes zur Seite wahrnehmen könnte. Ein solches Drehen des Kopfes (Schulterblick) ist wegen der einhergehenden Vernachlässigung des vorausliegenden Straßenverkehrsgeschehens in vielen Fällen nicht möglich. Insbesondere auf mehrspurigen Staßen soll es dem Fahrer eines Fahrzeugs durch ein BSD-System signalisiert werden, wenn ein anderes Fahrzeugs (Objekt) mit geringer Differenzgeschwindigkeit überholt und deshalb länger als nur einen Augenblick in den toten Winkel rechts oder links des Fahrzeugs einlaucht. Durch eine solche dem Fahrer zur Verfugung stehende Information kann die Unfallgefahr durch Übersehen anderer Fahrzeuge beim Spurwechsel verringert wenden.

Zur Erkennung fremder Fahrzeuge (Objekte) bzw. zur Evaluierung von Kollisionsszenarien werden nach dem Stand der Technik Sensoren am Fahrzeug eingesetzt, welche mit Hilfe von Ultraschall, Radar oder lichtwellen das Vorhandensein von Objekten berührungslos detektieren und weiterhin den Abstand des Fahrzeugs zu den Objekten messen können.

Aus US 5,583,495 ist eine Vorrichtung zur Detektion von Objekten im toten Winkel eines Fahrzeugs bekannt Mittels eines Signalgenerators werden individuelle Ultraschallwellen in einem vorgegebenen Winkel generiert. Die an einem potentiellen Objekt reflektierten bzw. gestreuten Ultraschallwellen werden mittels eines Ultraschallempfängers empfangen und verstärkt. Aus diesem Ultraschallsignal, der Geschwindigkeit des Fahrzeugs und dem Lenkwinkel des Fahrzeugs wird ein potentieller Kollisionszeitpunkt zwischen dem Objekt und dem eigenen Fahrzeug berechnet. Weiterhin weist die aus US 5,583,495 bekannte Vorrichtung Mittel zur Kommunikation mit dem Fahrer auf, welche im Falle einer wahrscheinlichen Kollision mit einem im toten Winkel befindlichen Objekt einen Alarm auslösen oder den Fahrer in anderer geeigneter Weise informieren.

Aus der US 5,359,331 ist ein Radarsystem bekannt, das in zwei Moden arbeiten kann. Für einen ersten Abstand wird eine erste Radarfrequenz im MHz-Bereich eingestellt, für einen zweiten Abstandswert, der nur ein Viertel so groß ist, eine viermal so hohe Frequenz.

Aus der GB 2, 315, 628 A ist ein Radarhöhenmesssystem bekannt, bei dem die Pulsbreite eines ausgesendeten Radarpulses proportional zur Höhe über Grund ist.

Nachteilig an den bekannten ultraschaffbasierten BSD-Systemen ist insbesondere deren zu hohe Reaktionszeit. Die Messzeit von ultraschallbasierten BSD-Systemen liegt aufgrund der geringeren Ausbreitungsgeschwindigkeit von Schallwellen (im Vergleich zu Radarwellen oder Lichtwellen) höher als bei vergleichbaren radarbasierten oder lichtwellenbasierten BSD-Systemen. Aufgrund der höheren Messdauer ist die Reaktionszeit des Systems höher, wodurch die entsprechende Warnung des Fahrers bei einer potentiellen Kollision mit einem Objekt im toten Winkel später erfolgt. Die Verwendung von schnelleren Radarsensoren oder Lichtsensoren geht wiederum mit einem erheblichen Kostennachteil einher.

### Darstellung der Erfindung, Aufgabe, Lösung, Vorteile

Es ist daher Aufgabe der vorliegenden Erfindung, ein Verfahren und eine Vorrichtung zur Detektion von Objekten in der Umgebung eines Fahrzeugs anzugeben, durch welche eine geringere Messdauer und daher eine geringere Reaktionszeit zur Warnung des Fahrers im Falle einer bevorstehenden Kollision mit einem Objekt in der Umgebung des Fahrzeugs benötigt wird. Hierdurch können insbesondere kostengünstige Ultraschallsensoren eingesetzt werden.

Diese Aufgabe wird erfindungsgemäß durch ein Verfahren mit den im Anspruch 1 genannten Merkmalen und eine Vorrichtung mit den im Anspruch 8 genannten Merkmalen gelöst.

Der Hauptvorteil der Erfindung liegt insbesondere in der schnellen Reaktionszeit eines erfindungsgemäß ausgeführten BSD-Systems im Vergleich zu herkömmlichen BSD-Systemen. Dadurch, dass die Abtastrate eines Messsignals in Abhängigkeit des zuvor ermittelten Abstandes zwischen Fahrzeug und Objekt eingestellt wird, ist es erfindungsgemäß möglich, die Abtastrate proportional zur Verringerung des Abstandes zwischen Fahrzeug und Objekt zu erhöhen. Hierdurch wird es möglich, das naheste Objekt, also das für eine zu detektierende, potentielle Kollision interessanteste Objekt, schneller zu erfassen und daher eine ausreichend frühe Warnung vor einem Zusammenstoß zu generieren. Dabei wird die Abtastrate eines Messsignals vorzugsweise umgekehrt proportional zum ermittelten Abstand zwischen Fahrzeug und Objekt eingestellt. Hierdurch kann insbesondere ein ultraschallbasiertes BSD-System realisiert werden, welches über eine ausreichend schnelle Reaktionszeit verfügt. Durch die Verwendung von Ultraschallsensoren kann ein erheblicher Kostenvorteil erzielt werden.

Durch das erfindungsgemäße Verfahren wird das Objekt sozusagen "messtechnisch verfolgt". Dabei wird die Umgebung des Fahrzeugs zunächst in einem relativ großen Abstand (bis 3 m) messtechnisch überwacht. Wird nun ein potentiell für eine Kollision in Frage kommendes Objekt innerhalb dieses Abstandes detektiert, wird die die Abtastrate, entsprechend der Annäherung des Objektes an das Fahrzeug erhöht. Daher wird es mit dem erfindungsgemäßen Verfahren einerseits gewährleistet, Objekte ab einem ausreichenden Abstand (beispielsweise 3 m Entfernung) detektieren zu können; andererseits wird gewährleistet, das Objektverhalten in einem geringeren Abstand (unter 3 m Entfernung) genauer und schneller beurteilen zu können, da der Objektabstand aufgrund der höheren Abtastrate zeitlich besser aufgelöst werden kann.

Mit Hilfe dieser besseren und vor allem zeitnäheren Kenntnis des Objektverhaltens relativ zur Position des Fahrzeugs und weiterer Daten, beispielsweise der Fahrzeuggeschwindigkeit und des Lenkwinkels und/oder Gierwinkels, kann nun mit ausreichender Genauigkeit und Geschwindigkeit auf einen möglichen Kollisionszeitpunkt geschlossen werden. Insbesondere kann bei Veränderung der Situation, beispielsweise einer Lenkbewegung des Fahrers oder bei einer plötzlich auftretenden starken Annäherung des Objektes, eine sofortige Kollisionswarnung an den Fahrer ausgegeben werden.

Eine erfindungsgemäße Vorrichtung zur Detektion eines Objektes in der Umgebung eines Fahrzeugs mit
- einem Mittel zum Aussenden von Messsignalen mit vorgegebener Abtastrate und Signalbreite,
- einem Mittel zum Empfangen der an einem Messobjekt reflektierten und/oder gestreuten Messsignale innerhalb eines vorgegebenen Zeitintervalls nach dem Aussenden der Messsignale und
- einem Mittel zur Auswertung der empfangenen Messsignale,
weist erfindungsgemäß ein Mittel zur Steuerung der Abtastrate der Messsignale auf, welches mit dem Mittel zur Auswertung der empfangenen Messsignale und mit dem Mittel zum Aussenden der Messsignale verbunden ist.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
- Fig. 1: eine schematische Darstellung des Erfassungsbereiches eines Ultraschallsensors bezogen auf den toten Winkel eines Fahrzeugs;
- Fig. 2a,b,c: die schematische Darstellung der Annäherung eines im toten Winkel eines Fahrzeugs befindlichen Objektes und
- Fig. 2d: die schematische Darstellung der Erhöhung der Abtastrate in Abhängigkeit vom ermittelten Abstand zwischen Fahrzeug und Objekt.

### Bester Weg zur Ausführung der Erfindung

Das erfindungsgemäße Verfahren und die erfindungsgemäße Vorrichtung können zur Erfassung von Objekten in der gesamten Umgebung des Fahrzeugs eingesetzt werden. Insbesondere ist es vorteilhaft dabei denjenigen Bereich der Umgebung zu überwachen, der von einem Fahrer des Fahrzeugs nicht unmittelbar eingesehen werden kann.

Gegebenenfalls treten in der Fahrzeugumgebung auch Bereiche auf, die selbst mit Hilfe einer Benutzung der Fahrzeugspiegel durch den Fahrer nicht eingesehen werden können, der sogenannte "tote Winkel". Eine Überwachung dieses Bereiches am Fahrzeug ist daher besonders wünschenswert. Im folgenden ist die Erfindung daher beispielhaft für eine Überwachung des toten Winkels beschrieben.

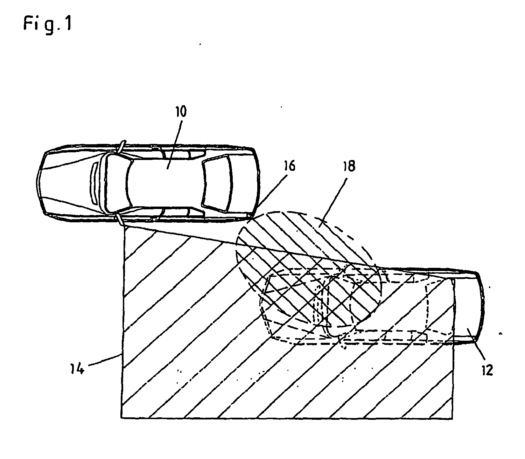

Figur 1 zeigt eine schematische Darstellung des Erfassungsbereichs 18 des Ultraschallsensors 16 für das Objekt 12 im toten Winkel 14 des Fahrzeugs 10. Zur besseren Veranschaulichung ist in der Figur 1 lediglich der linksseitige tote Winkel 14 des Fahrzeugs 10 dargestellt. Der Ultraschallsensor 16 ist an der linken Heckseite des Fahrzeugs 10 angeordnet. Zur Erzielung eines weiteren Kostenvorteils ist es erfindungsgemäß vorgesehen, die bereits vorhandenen Ultraschall sensoren eines Ultraschall-Parkpilot-Systems, welches in einigen Personenkraftwagen bereits installiert ist, zu nutzen. Dabei werden die Ultraschallsensoren des Parkpilot-Systems bei Geschwindigkeiten unter 15 km/h aktiv, um den Fahrer beim Einparken zu unterstützen. Diese Ultraschallsensoren können jedoch auch im Geschwindigkeitsbereich von über 15 km/h eingesetzt werden, um nahe Objekte 12, welche sich im Augenblick des Überholvorgangs neben dem Fahrzeug 10, also im toten Winkel 14 befinden, zu detektieren. Hierdurch wird insbesondere die Verwendung weiterer Sensoren eingespart. Die Reichweite der derzeit verfügbaren Ultraschall-Sensoren beträgt zirka 2,5 bis 3 m. Somit kann sichergestellt werden, dass nahe mitschwimmende Objekte im toten Winkel detektiert werden können.

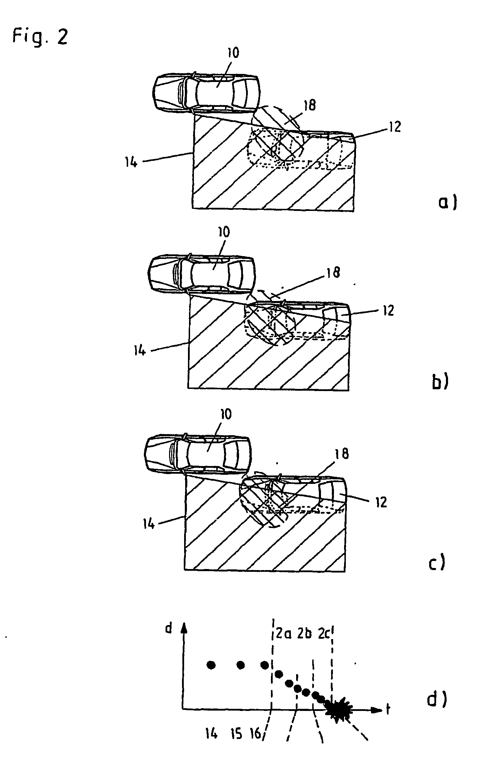

Figur 2a, b und c zeigt die Annäherung eines zumindest teilweise im toten Winkel 14 befindlichen Objekts 12 an ein Fahrzeug 10. Dabei befindet sich das Objekt 12 bereits in Figur 2a innerhalb des Erfassungsbereichs 18 des Ultraschallsensors 16. Dabei stellt d den Abstand zwischen dem Fahrzeug 10 und dem Objekt 12 dar. Aufgrund der Verringerung des Abstandes d zwischen dem Fahrzeug 10 und dem Objekt 12 wird erfindungsgemäß die Abtastrate erhöht. Die Erhöhung der Abtastrate in Abhängigkeit von der Verringerung des Abstandes d ist schematisch in Figur 2d dargestellt. Aufgrund der Verringerung des Abstandes, wie in Figur 2a dargestellt, des Objektes 12 relativ zum Fahrzeug 10 wird die Abtastrate erhöht. Daher liegen in einem bestimmten Zeitintervall entsprechend mehr Messwerte über den Abstand d des Objektes 12 vom Fahrzeug 10 vor. Sinngemäß repräsentieren die Messwerte zu den Zeitpunkten t7 und t8 die Messung für den Abstand entsprechend Figur 2a. Aufgrund der erfolgten Verringerung des Abstandes d wird die Abtastrate erfindungsgemäß erhöht. Dadurch können in einem bestimmten Zeitintervall mehr Messwerte über den Abstand d des Objektes 12 vom Fahrzeug 10 ermittelt werden. Aufgrund des geringeren Abstandes d ist die Laufzeit der Ultraschallwellen von Ultraschallsensor 16 zum Objekte und zurück geringer. Sinngemäß repräsentieren die Messwerte zu den Zeitpunkten t9 und t10 die Messung für den Abstand entsprechend Figur 2b. Dabei ist das Zeitintervall [t9, t10] kleiner als das Zeitintervall [t7, t8]. Bei weiterer Annäherung entsprechend Fig. 2c wird die Abtastrate weiter erhöht.

Daher repräsentieren die Messwerte zu den Zeitpunkten t11 und t12 sinngemäß die Messung für den Abstand entsprechend Fig. 2c. Dabei ist das Zeitintervall [t11, t12] wiederum kleiner als das Zeitintervall [t9, t10].

Eine Warnung wird dann an den Fahrer abgegeben, wenn aufgrund der ermittelten Daten eine Kollision mit an Sicherheit grenzender Wahrscheinlichkeit bevorsteht.

Die Erfindung beschränkt sich nicht auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Detektion eines Objektes in der Umgebung eines Fahrzeugs durch Aussenden von Messsignalen mit vorgegebener Abtastrate und Signalbreite und Empfangen der an einem Objekt reflektierten und/oder gestreuten Messsignale innerhalb eines vorgegebenen Zeitintervalls nach Aussenden der Messsignale und Ermittlung des Abstandes zwischen dem Fahrzeug und dem sich in der Umgebung des Fahrzeugs befindlichen Objekt aus den Messsignalen, **dadurch gekennzeichnet, dass** die Abtastrate in Abhängigkeit des ermittelten Abstandes zwischen Fahrzeug (10) und Objekt (12) eingestellt wird.

2. Verfahren nach Anspruch 1, **dadurch gekennzeichnet, dass** die Abtastrate umgekehrt proportional zum ermittelten Abstand (d) zwischen Fahrzeug (10) und Objekt (12) eingestellt wird.

3. Verfahren nach einem der vorherigen Ansprüche, **dadurch gekennzeichnet, dass** ein toter Winkel (14) des Fahrzugs überwacht wird.

4. Verfahren nach einem der vorherigen Ansprüche ,**dadurch gekennzeichnet, dass** zur Ermittlung eines potentiellen Kollisionszeitpunktes von dem Fahrzeug (10) und dem sich in der Umgebung des Fahrzeugs (10) befindlichen Objekt (12) die Signale mindestens eines Lenkwinkelsensors des Fahrzeugs (10) verarbeitet werden.

5. Verfahren nach einem der vorhergehenden Ansprüche, **dadurch gekennzeichnet, dass** die Messsignale und/oder die Signale des mindestens einen Lenkwinkelsensors und/oder des mindestens einen Gierwinkelsensors des Fahrzeugs (10) durch den Bordcomputer des Fahrzeugs (10) ausgewertet werden.

6. Verfahren nach einem der vorhergehenden Ansprüche, **dadurch gekennzeichnet, dass** die Messsignale Ultraschallsignale, Radarsignale und/oder Lichtwellensignale sind.

7. Verfahren nach einem der vorhergehenden Ansprüche, **dadurch gekennzeichnet, dass** die Messsignale mittels Ultraschallsensoren (16) eines Parkpilot-Systems ausgesendet und empfangen werden.

8. Vorrichtung zur Detektion eines Objektes in einer Umgebung, insbesondere im toten Winkel eines Fahrzeugs mit einem Mittel zum Aussenden von Messsignalen mit vorgegebener Abtastrate und Signalbreite und einem Mittel zum Empfangen der an einem Objekt reflektierten und/oder gestreuten Messsignale innerhalb eines vorgegebenen Zeitintervalls nach Aussenden der Messsignale und einem Mittel zur Auswertung der empfangenen Messsignale, **dadurch gekennzeichnet, dass** die Vorrichtung ein Mittel zur Steuerung der Abtastrate der Messsignale aufweist, welches mit dem Mittel zur Auswertung der empfangenen Messsignale und mit dem Mittel zum Aussenden von Messsignalen verbunden ist.

9. Vorrichtung nach Anspruch 8, **dadurch gekennzeichnet, dass** das Mittel zum Aussenden von Messsignalen und das Mittel zum Empfangen von Messsignalen mindestens einen Ultraschallsensor (16) aufweist.

10. Vorrichtung nach Anspruch 8 oder 9, **dadurch gekennzeichnet, dass** das Mittel zum Aussenden von Messsignalen und das Mittel zum Empfangen von Messsignalen die nach links und rechts ausgerichteten Heck-Parkpilot-Ultraschallsensoren eines Fahrzeugs aufweisen.

11. Vorrichtung nach einem der Ansprüche 8 bis 10, **dadurch gekennzeichnet, dass** das Mittel zur Auswertung der empfangenen Messsignale und/oder das Mittel zur Steuerung der Abtastrate der Messsignale der Bordcomputer eines Fahrzeuges ist.

12. Vorrichtung nach einem der Ansprüche 8 bis 11, **dadurch gekennzeichnet, dass** das Mittel zur Auswertung der empfangenen Messsignale mit mindestens einem Lenkwinkelsensor und/oder mit mindestens einem Gierwinkelsensor verbunden ist.

## Claims

1. Method for detecting an object in the surroundings of a vehicle by emitting measurement signals with a predefined sampling rate and signal width and receiving the measurement signals, reflected and/or scattered at an object, within a predefined time interval after the emission of the measurement signals, and determining the distance between the vehicle and the object located in the surroundings of the vehicle from the measurement signals, **characterized in that** the sampling rate is set as a function of the determined distance between the vehicle (10) and object (12).

2. Method according to Claim 1, **characterized in that** the sampling rate is set in inverse proportion to the determined distance (d) between the vehicle (10) and the object (12).

3. Method according to one of the preceding claims, **characterized in that** a blind spot (14) of the vehicle is monitored.

4. Method according to one of the preceding claims, **characterized in that**, in order to determine a time of a potential collision between the vehicle (10) and the object (12) located in the surroundings of the vehicle (10), the signals of at least one steering angle sensor of the vehicle (10) are processed.

5. Method according to one of the preceding claims, **characterized in that** the measurement signals and/or the signals of the at least one steering angle sensor and/or of the at least one yaw angle sensor of the vehicle (10) are evaluated by means of the on-board computer of the vehicle (10).

6. Method according to one of the preceding claims, **characterized in that** the measurement signals are ultrasonic sound signals, radar signals and/or lightwave signals.

7. Method according to one of the preceding claims, **characterized in that** the measurement signals are emitted and received by means of ultrasonic sound sensors (16) of a parking pilot system.

8. Device for detecting an object in the surroundings, in particular in the blind spot of a vehicle, having a means for emitting measurement signals with a predefined sampling rate and signal width, and a means for receiving the measurement signals which are reflected and/or scattered at an object, within a predefined time interval after the emission of the time signals, and a means for evaluating the received measurement signals, **characterized in that** the device has a means for controlling the sampling rate of the measurement signals, which means is connected to the means for evaluating the received measurement signals and to the means for emitting measurement signals.

9. Device according to Claim 8, **characterized in that** the means for emitting measurement signals and the means for receiving measurement signals have at least one ultrasonic sound sensor (16).

10. Device according to Claim 8 or 9, **characterized in that** the means for emitting measurement signals and the means for receiving measurement signals have the rear-mounted parking pilot ultrasonic sound sensors of a vehicle which are oriented to the left and to the right.

11. Device according to one of Claims 8 to 10, **characterized in that** the means for evaluating the received measurement signals and/or the means for controlling the sampling rate of the measurement signals are the on-board computer of a vehicle.

12. Device according to one of Claims 8 to 11, **characterized in that** the means for evaluating the received measurement signals is connected to at least one steering angle sensor and/or to at least one yaw angle sensor.

## Revendications

1. Procédé de détection d'un objet dans l'environnement d'un véhicule par émission de signaux de mesure à un taux d'échantillonnage et une largeur de bande prédéterminés, réception des signaux de mesure réfléchis et/ou diffusés par l'objet pendant un intervalle de temps prédéterminé après l'émission des signaux de mesure et détermination de la distance entre le véhicule et l'objet situé dans l'environnement du véhicule à partir des signaux de mesure,
**caractérisé en ce que**
le taux d'échantillonnage est ajusté en fonction de la distance déterminée entre le véhicule (10) et l'objet (12).

2. Procédé selon la revendication 1, **caractérisé en ce que** le taux d'échantillonnage est inversement proportionnel à la distance (d) déterminée entre le véhicule (10) et l'objet (12).

3. Procédé selon l'une des revendications précédentes, **caractérisé en ce qu'**il surveille un angle mort (14) du véhicule.

4. Procédé selon l'une des revendications précédentes, **caractérisé en ce que** les signaux d'au moins un détecteur d'angle de braquage du véhicule (10) sont traités en vue de déterminer l'instant d'une éventuelle collision entre le véhicule (10) et l'objet (12) situé dans l'environnement du véhicule (10).

5. Procédé selon l'une des revendications précédentes, **caractérisé en ce que** les signaux de mesure et/ou les signaux du ou des détecteurs d'angle de braquage et/ou du ou des détecteurs d'angle de lacet du véhicule (10) sont évalués par l'ordinateur de bord du véhicule (10).

6. Procédé selon l'une des revendications précédentes, **caractérisé en ce que** les signaux de mesure sont des signaux d'ultrasons, des signaux radar et/ou des signaux formés d'ondes lumineuses.

7. Procédé selon l'une des revendications précédentes, **caractérisé en ce que** les signaux de mesure sont émis et reçus au moyen de détecteurs (16) à ultrasons d'un système d'assistance au stationnement.

8. Dispositif de détection d'un objet dans un environnement, en particulier dans l'angle mort d'un véhicule, doté d'un moyen d'émission de signaux de mesure à un taux d'échantillonnage et une largeur de bande prédéfinis, d'un moyen de réception des signaux de mesure réfléchis et/ou diffusés par un objet et d'un moyen d'évaluation des signaux de mesure reçus à l'intérieur d'un intervalle de temps prédéterminé après l'émission des signaux de mesure,
**caractérisé en ce que**
le dispositif présente un moyen de commande du taux d'échantillonnage des signaux de mesure qui est relié au moyen d'évaluation des signaux de mesure reçus et au moyen d'émission de signaux de mesure.

9. Dispositif selon la revendication 8, **caractérisé en ce que** le moyen d'émission de signaux de mesure et le moyen de réception de signaux de mesure présentent au moins un détecteur (16) à ultrasons.

10. Dispositif selon les revendications 8 ou 9, **caractérisé en ce que** le moyen d'émission de signaux de mesure et le moyen de réception de signaux de mesure présentent des détecteurs arrière à ultrasons pour l'assistance au stationnement orientés vers la gauche et la droite du véhicule.

11. Dispositif selon l'une des revendications 8 à 10, **caractérisé en ce que** le moyen d'évaluation des signaux de mesure reçus et/ou le moyen de commande du taux d'échantillonnage des signaux reçus sont l'ordinateur de bord d'un véhicule.

12. Dispositif selon l'une des revendications 8 à 11, **caractérisé en ce que** le moyen d'évaluation des signaux de mesure reçus est relié à au moins un détecteur d'angle de braquage et/ou à au moins un détecteur d'angle de lacet.
